# EUROPÄISCHE PATENTSCHRIFT

(11) **EP 0 876 068 B1**
(45) Veröffentlichungstag und Bekanntmachung des Hinweises auf die Patenterteilung: **21.12.2005**
(21) Anmeldenummer: 98104962.0
(22) Anmeldetag: 18.03.1998
(51) Int. Cl.: H04Q 3/00

(54) **Teilnehmeranschlusskonzentrator**
Concentrator for subscriber connections
Concentrateur pour la connection des abonnés

(30) Priorität: 18.03.1997 DE 19711321
(43) Veröffentlichungstag der Anmeldung: 04.11.1998
(73) Patentinhaber: SIEMENS AKTIENGESELLSCHAFT, 80333 München (DE)
(72) Erfinder: Löbig, Norbert, Dr., 64291 Darmstadt (DE)

(56) Entgegenhaltungen:
- EP-A- 0 477 614
- WO-A-91/10333
- DE-A- 19 523 184

## Beschreibung

Die Erfindung betrifft einen Teilnehmeranschlußkonzentrator mit Teilnehmerschnittstellen zum Anschließen von Teilnehmeranschlußleitungen und mit mindestens einer ortsvermittlungsstellenseitigen, mehrere PCM-Systeme umfassenden V-Schnittstelle.

Solche Teilnehmeranschlußkonzentratoren sind üblicherweise einer digitalen Ortsvermittlungsstelle eines Kommunikationsnetzes zugeordnet und an diese angeschlossen. Eine derartige digitale Ortsvermittlungsstelle enthält u.a. periphere Einheiten, d.h. Anschlußeinrichtungen zum Anschließen von Teilnehmeranschlußleitungen, die entweder unmittelbar in den Bereich eines Teilnehmers oder an einen Teilnehmeranschlußkonzentrator bzw. ein Anschlußleitungsnetzwerk geführt sind. Außerdem enthält die digitale Ortsvermittlungsstelle eine zentrale Rechnerplattform, eine Nachrichtenverteileinrichtung und weitere zentrale Einheiten, wie ein Koppelfeld, Protokollabschlußeinrichtungen, Hintergrundspeicher, eine Signalisierungseinrichtung und Bedieneinrichtungen für administrative und sicherheitsrelevante Zwecke.

Die peripheren Einrichtungen der Ortsvermittlungsstelle erfüllen wesentliche, an die Sprachkanäle dieser peripheren Einrichtungen gebundene, vermittlungstechnische Aufgaben. Sie enthalten daher vermittlungstechnische, betriebstechnische und administrative Programme sowie über eine Datenbasis mit Informationen über Anschlußlage, Signalisierung, Berechtigungen, Rufnummern, individuelle Charakteristika von Verbindungsleitungen und Teilnehmeranschlüssen sowie den Ausbauzustand und die Konfiguration der peripheren Einrichtung.

Die zentrale Rechnerplattform dient der koordinierenden Steuerung des Verbindungsaufbaus und des Verbindungsabbaus und reagiert außerdem auf administrative und fehlerbedingte Konfigurationsänderungen. Die peripheren Einrichtungen einer Ortsvermittlungsstelle sind über die Nachrichtenverteileinrichtung untereinander und mit der gemeinsamen Rechnerplattform verbunden. Die weiteren zentralen Systemkomponenten der Ortsvermittlungsstelle stellen dem Vermittlungssystem Spezialfunktionen zur Verfügung, beispielsweise zum Durchschalten der Sprachkanäle, zum Bearbeiten von Signalisierungsprotokollen, zum Realisieren der Betreiberschnittstelle der Ortsvermittlungsstelle oder zum Speichern von Massendaten.

Teilnehmeranschlüsse können zwar unmittelbar über Teilnehmeranschlußleitungen an periphere Einrichtungen angeschlossen werden. Üblicherweise werden jedoch Teilnehmeranschlüsse über Teilnehmeranschlußleitungen und Teilnehmeranschlußkonzentratoren an die Ortsvermittlungsstelle herangeführt. Die Teilnehmeranschlußkonzentratoren können im Bereich der Ortsvermittlungsstelle oder von dieser beabstandet angeordnet sein. Außerdem ist es möglich, einen Teilnehmeranschlußkonzentrator an zwei voneinander unabhängige Ortsvermittlungsstellen anzuschließen.

Das Heranführen eines Teilnehmeranschlusses an die Ortsvermittlungsstelle kann gemäß den ETSI-Spezifikationen V5.1 und V5.2 (ETS-300 347 und ETS-300 324) und der entsprechenden Standardisierung gemäß ITU-T, Recommandation G.965 "Signalling Protocoll and Switching (SPS); V-Interfaces at the digital local exchange (LE); V5.2 Interface for the Support of Access Networks (AN)" auch von sogenannten Anschlußleitungsnetzwerken (Access Networks AN) erfüllt werden. Solche Anschlußleitungsnetzwerke sind im Gegensatz zu Teilnehmeranschlußkonzentratoren von Vermittlungsstellen funktional und üblicherweise auch organisatorisch getrennte Einrichtungen, die den Teilnehmern in ihrem Einzugsbereich neben dem Zugang zu Fernsprechdatennetzen und Paketdatennetzen auch Zugang zu Festnetzen (Least Line Networks) und zu distributiven Diensten, wie z.B. Kabelfernsehen, bieten.

Teilnehmeranschlußkonzentratoren werden ortsvermittlungsstellenseitig zur Realisierung des Zugangs zu den vermittelten Diensten über genau definierte, herstellerspezifische, auf der PCM-Übertragungstechnik basierende Schnittstellen angeschlossen. Anschlußleitungsnetzwerke werden üblicherweise über standardisierte Schnittstellen, wie z.B. die Schnittstelle V5.2 gemäß den obengenannten Recommandationen ETS-300 347 von ETSI bzw. G.965 von ITU-T an eine Ortsvermittlungsstelle herangeführt. Bei der standardisierten Schnittstelle V5.2 sind zwei Kanäle unterschiedlicher PCM-Systeme als gedoppelte Schnittstellensteuerkanäle zum ortsvermittlungsstellenseitigen Steuern der V-Schnittstelle des Anschlußleitungsnetzwerks vorgesehen.

Die Teilnehmerperipherie der Ortsvermittlungsstelle enthält somit eine Vielzahl von Schnittstellen zu Teilnehmeranschlußkonzentratoren und/oder Anschlußleitungsnetzen. Eine Schnittstelle zu einem Teilnehmeranschlußkonzentrator bzw. einem Anschlußleitungsnetz kann, beispielsweise gemäß der Spezifikation V5.2, abhängig von der Anzahl der angeschlossenen Teilnehmer und deren Verkehrsverhalten mehr als ein PCM-System zum Anschließen von entsprechenden PCM-Strecken umfassen. In der standardisierten Schnittstelle V5.2 sind beispielsweise ein bis sechzehn PCM30-Systeme vorgesehen. Durch die sich hierbei ergebende hohe Nutzsignalbandbreite kann es erforderlich sein, daß mehrere periphere Einrichtungen einer Ortsvermittlungsstelle zum Bereitstellen einer solchen Schnittstelle benötigt werden. Falls eine periphere Einrichtung der Ortsvermittlungsstelle mehrere PCM-Strecken terminieren kann, können an solchen periphere Einrichtungen auch PCM-Strecken mehrerer, zu Teilnehmeranschlußkonzentratoren bzw. Anschlußleitungsnetzen führender Schnittstellen anschließbar sein.

Über V5-Schnittstellen an Ortsvermittlungsstellen angeschlossene Anschlußleitungsnetzwerke haben gegenüber TeilnehmeranSchlußkonzentratoren einen anderen Leistungsumfang und sind gemäß eines modernen Betriebskonzeptes in ein Kommunikationsnetz integriert. So erfolgen die Bedienung sowie die Betriebs- und Wartungstechnik eines Anschlußleitungsnetzwerkes über eine eigene, standardisierte Bedienerschnittstelle Q3 (ETS-300 377, ETSI Q3 Spezifikation an Ortsvermittlungsstellen für das Konfigurationsmanagement von V5-Schnittstellen; Draft pr ETS 300 379, ETSI Q3 Spezifikation an Ortsvermittlungsstellen für das Fehler- und Performancemanagement von V5-Schnittstellen), über eigene Bediensysteme und Betriebs- und Wartungsteams. Demgegenüber ist die Betriebstechnik und die Sicherheitstechnik von Teilnehmeranschlußkonzentratoren herstellerspezifisch integriert in zugehörigen Ortsvermittlungsstellen des gleichen Herstellers, so daß das Bedien- und Wartungsteam des Vermittlungssystems auch für Betrieb und Wartung der Teilnehmeranschlußkonzentratoren zuständig ist.

Bei Anschlußleitungsnetzwerken mit standardisierter V5-Schnittstelle kann die Übertragungskapazität auf der Schnittstelle zur Ortsvermittlungsstelle, wie oben bereits erläutert, bezüglich Sprachkanalanzahl, Signalisierungsaufkommen und Paketdatenvolumen flexibel eingerichtet werden. Bei der Verwendung von Teilnehmeranschlußkonzentratoren ist die Übertragungskapazität herstellerspezifisch orientiert an dem mittleren zu erwartenden Bedarf bzw. an Planungszahlen und ist somit wenig flexibel gegenüber Änderungen im laufenden Betrieb.

Obwohl, wie vorstehend dargelegt, moderne Anschlußleitungsnetzwerke Teilnehmeranschlußkonzentratoren überlegen sind, ist insbesondere bei kleineren, von einer Ortsvermittlungsstelle abgesetzten Standorten eine separate Bedienerschnittstelle des Anschlußleitungsnetzwerkes aufwendig, zu teuer und damit unwirtschaftlich. Daher ist das Verwenden einer standardisierten Schnittstelle V5 für die meisten Anwendungsfälle von Teilnehmeranschlußkonzentratoren nicht interessant und wird daher auch nicht eingesetzt.

Aus der internationalen Patentanmeldung WO 91/10333 ist ein Funkkommunikationsnetz mit digitalen Ortsvermittlungsstellen bekannt. An diese sind über U-Schnittstellen Schnurlos-Netzabschlusseinheiten angeschlossen. V-Schnittstellen sind hier jedoch nicht angesprochen. Aufgabe der vorliegenden Erfindung ist es, einen Teilnehmeranschlußkonzentrator mit Teilnehmerschnittstellen zum Anschließen von Teilnehmeranschlußleitungen und mit mindestens einer ortsvermittlungsstellenseitigen, mehrere PCM-Systeme umfassenden V-Schnittstelle, zu verbessern.

Diese Aufgabe löst die Erfindung durch einen Teilnehmeranschlußkonzentrator mit einer V-Schnittstelle, die mindestens die Merkmale der standardisierten Schnittstelle V5.2 hat und bei der zwei Kanäle unterschiedlicher PCM-Systeme als gedoppelte Steuerkanäle zum ortsvermittlungsstellenseitigen Steuern des Teilnehmeranschlußkonzentrators vorgesehen sind, die zum Steuern des Teilnehmeranschlußkonzentrators gleichzeitig aktiv sind. Eine Variante eines erfindungsgemäßen Teilnehmeranschlußkonzentrators sieht hierbei vor, daß im Normalfall das Auswerten der auf dem ersten der beiden Steuerkanäle übertragenen Steuerbefehle und Meldungen erfolgt und, falls dieser erste Steuerkanal gestört ist, automatisch das Auswerten der auf dem zweiten der beiden Steuerkanäle übertragenen Steuerbefehle und Meldungen erfolgt. Eine zweite Variante eines erfindungsgemäßen Teilnehmeranschlußkonzentrators sieht vor, daß im Normalfall das Auswerten der auf beiden Steuerkanälen übertragenen Steuerbefehle und Meldungen erfolgt und, falls einer dieser Steuerkanäle gestört ist, der gestörte Steuerkanal deaktiviert wird.

Ein erfindungsgemäßer Teilnehmeranschlußkonzentrator hat somit eine V-Schnittstelle, die die Merkmale der standardisierten Schnittstelle V5.2 hat, wie z.B. die flexible Anzahl von PCM-Systemen zwischen 1 und 16 sowie zwei Kanäle, die als gedoppelte Schnittstellensteuerkanäle zum ortsvermittlungsstellenseitigen Steuern der V-Schnittstelle vorgesehen sind. Falls die V-Schnittstelle mehr als ein PCM-System umfaßt, gehören diese Schnittstellensteuerkanäle zu unterschiedlichen PCM-Systemen.

Darüber hinaus ermöglicht ein erfindungsgemäßer Teilnehmeranschlußkonzentrator aufgrund der beiden als gedoppelte Steuerkanäle zum ortsvermittlungsseitigen Steuern des Teilnehmeranschlußkonzentrators vorgesehenen Kanäle das Bedienen und die Wartung des Teilnehmeranschlußkonzentrators über die Ortsvermittlungsstelle.

Da die beiden Steuerkanäle zum ortsvermittlungsstellenseitigen Steuern des Teilnehmeranschlußkonzentrators gleichzeitig aktiv sind und unterschiedlichen PCM-Systemen angehören, ist auch bei plötzlichem Ausfall eines dieser Steuerkanäle die Steuerung des Teilnehmeranschlußkonzentrators sichergestellt. Gleichzeitig aktiv bedeutet nämlich, daß die Steuerbefehle und Meldungen zum Steuern des Teilnehmeranschlußkonzentrators in beiden Steuerkanälen übertragen werden. Da beide Steuerkanäle zum Übertragen von Steuersignalen aktiv sind, braucht folglich nicht, wie beispielsweise bei den gedoppelten Schnittstellensteuerkanälen der standardisierten Schnittstelle V5.2, bei Ausfall eines Schnittstellensteuerkanals die Sende-/Empfangsfunktion des anderen Schnittstellensteuerkanals aktiviert zu werden. Auch die beim Auftreten einer Störung übertragene Steuerinformation steht daher unmittelbar zur Verfügung.

Ein Teilnehmeranschlußkonzentrator gemäß der ersten oben beschriebenen Variante der Erfindung, bei dem im Normalfall das Auswerten der auf dem ersten der beiden Steuerkanäle übertragenen Steuerbefehle und Meldungen zum Steuern des Teilnehmeranschlußkonzentrators erfolgt und, falls dieser erste Steuerkanal gestört ist, automatisch das Auswerten der auf dem zweiten der beiden Steuerkanäle übertragenen Steuerbefehle und Meldungen erfolgt, erfordert im allgemeinen intelligente Auswerteeinrichtungen von Steuereinheiten für beide Steuerkanäle einer Schnittstelle, die sich insbesondere gegenseitig über schnittstellenrelevante und übertragungsstreckenrelevante Zustände und Ereignisse informieren. Solche intelligenten Auswerteeinrichtungen sind sowohl im Bereich der Schnittstelle des Teilnehmeranschlußkonzentrators als auch im Bereich einer über PCM30-Strecken mit dieser Schnittstelle verbundenen Schnittstelle einer ortsvermittlungsstellenseitigen Einrichtung, wie z.B. eines übergeordneten (kaskadierten) Teilnehmeranschlußkonzentrators, eines Anschlußleitungsnetzes oder peripheren Einrichtungen einer Ortsvermittlungsstelle, erforderlich.

Ist ein Informationsaustausch zwischen den Steuereinheiten beider Steuerkanäle einer Schnittstelle nicht möglich, so kann gemäß der zweiten Variante eines erfindungsgemäßen Teilnehmeranschlußkonzentrators im Normalfall das Auswerten der auf beiden Steuerkanälen übertragenen Steuerbefehle und Meldungen erfolgen und, falls einer dieser Steuerkanäle gestört ist, kann der gestörte Steuerkanal deaktiviert werden.

Da die ortsvermittlungsstellenseitige Schnittstelle eines erfindungsgemäßen Teilnehmeranschlußkonzentrators die Merkmale der standardisierten Schnittstelle V5.2 erfüllt, ist er unter anderem zum Aufbau von Analogverbindungen und somit zum Anschließen von Normalteilnehmern, von öffentlichen Fernsprechern, von Sammelanschlüssen und von Notruftelefonen geeignet. Darüber hinaus können auch ISDN-Verbindungen für Basisanschlüsse oder Primärratenanschlüsse aufgebaut werden, und es besteht Zugang zu Paketnetzen über B-Kanäle und D-Kanäle. Zudem werden (n x 64)kBit/s-Verbindungen unterstützt.

Da die ortsvermittlungsstellenseitige V-Schnittstelle mindestens die Merkmale einer standardisierten Schnittstelle V5.2 hat, stehen mindestens folgende Steuerkanäle und Paketdatenkanäle gemäß V5.2 zur Verfügung, wobei mindestens die Zeitschlitze 15, 16 und 31 (Timeslot TS15, TS16, TS31) jedes PCM30-Systems für Steuerkanäle verwendet werden können:
- Steuerkanäle einer sogenannten ersten Schutzgruppe (Protection Group 1) sind der Zeitschlitz 16 eines ersten, mit Primary Link bezeichneten PCM30-Systems mit einem Steuerkanal zur Übertragung einer Steuerkanal-Ersatzschaltung (Schutz-Protokoll), eines Protokolls zur Sprach/Nutzkanalzuordnung (Nutzkanalsteuerung, Bearer Channel Control BCC), der Schnittstellensteuerung (Port Control) und der PCM-System-Steuerung (Link Control). Außerdem gehört zu den Steuerkanälen der ersten Schutzgruppe der Zeitschlitz 16 eines zweiten, mit Secondary Link bezeichneten PCM30-Systems mit einem Ersatzsteuerkanal (Standby Channel STB) als redundanter Doppelkanal zur Übertragung der Steuerkanal-Ersatzschaltung (Schutz-Protokoll zur Kanalumschaltung bei Ausfall des Primary Link);
- Aktive Steuerkanäle einer sogenannten zweiten Schutzgruppe (Protection Group 2) sind gemäß V5.2 bis zu 3 Steuerkanäle eines PCM-Systems bzw. bis zu 46 Steuerkanäle einer Schnittstelle V5.2. Außerdem sind in der zweiten Schutzgruppe jeweils bis zu drei Ersatzsteuerkanäle vorgesehen. Wie weiter unten noch erläutert wird, kann in einigen Weiterbildungen eines erfindungsgemäßen Teilnehmeranschlußkonzentrators die Anzahl der möglichen Ersatzsteuerkanäle größer sein als im Standard V5.2 zugelassen.

Innerhalb der genannten Steuerkanäle sind folgende Steuerpfade vorgesehen:
- ein ISDN-Steuerpfad oder Ds-Pfad zur ISDN-Signalisierung,
- ein D-Kanal-Paketdatenpfad oder p-Pfad,
- ein PSDN-Pfad (ein Steuerpfad pro Schnittstelle zur Steuerung von Analog-Telefonie),
- ggf. unterschiedliche Steuerpfade in einem gemeinsamen Steuerkanal,
- Steuerpfade innerhalb der ersten und zweiten Schutzgruppe.

Die Steuerkanäle zum ortsvermittlungsstellenseitigen Steuern des Teilnehmeranschlußkonzentrators sind vorzugsweise in den Zeitschlitzen 15, 16 und 31 von PCM30-Systemen angeordnet, können aber auch in Zeitschlitzen vorgesehen sein, die bei Schnittstellen V5.2 der Nutzinformationsübertragung vorbehalten sind. Erfindungsgemäß ist eine geradzahlige Anzahl solcher Steuerkanäle zum ortsvermittlungsstellenseitigen Steuern des Teilnehmeranschlußkonzentrators vorgesehen, von denen je zwei Steuerkanäle zum Übertragen der selben Meldungen und Daten dienen. Demnach ist die Hälfte der zum ortsvermittlungsstellenseitigen Steuern des Teilnehmeranschlußkonzentrators vorgesehenen Steuerkanäle als Ersatzkanäle vorgesehen und gehört unterschiedlichen PCM-Systemen an. Zum ortsvermittlungsstellenseitigen Steuern des Teilnehmeranschlußkonzentrators vorgesehene Steuerkanäle und die zugehörigen Ersatzkanäle sind jedoch gleichzeitig aktiv, im Gegensatz zu den gemäß V5.2 im Zeitschlitz 16 zweier PCM30-Systeme (Primary Link und Secondary Link) vorgesehenen Schnittstellensteuerkanäle, von denen der im Primary Link vorgesehene Steuerkanal die gesamte Steuerinformation überträgt und der im Secondary Link vorgesehene Steuerkanal im Normalfall nur ein Schutz-Protokoll zur Kanalumschaltung bei Ausfall des Primary Link überträgt.

In einer besonderen Ausgestaltungsform des Teilnehmeranschlußkonzentrators sind zum ortsvermittlungsstellenseitigen Steuern des Teilnehmeranschlußkonzentrators die Zeitschlitze Nr. 16 zweier PCM-Systeme vorgesehen, die bei der standardisierten Schnittstelle V5.2 für gedoppelte Schnittstellensteuerkanäle vorgesehen sind. In diesem Falle kann über die üblicherweise zur Schnittstellensteuerung vorgesehenen Kanäle auch die Steuerung des Teilnehmeranschlußkonzentrators ablaufen. Dies hat den Vorteil, daß weniger Nutzsignalkanäle für Steuerungszwecke benötigt werden. Dies führt jedoch dazu, daß die Schnittstellensteuerung nicht gemäß dem Standard V5.2 abläuft.

In Weiterbildungen der Erfindung stehen, insbesondere wenn eine größere Datenmenge zum Steuern eines Teilnehmeranschlußkonzentrators benötigt werden, mehr als zwei Kanäle als Steuerkanäle zum ortsvermittlungsstellenseitigen Steuern des Teilnehmeranschlußkonzentrators zur Verfügung. In diesem Falle ist eine geradzahlige Anzahl von Steuerkanälen zum ortsvermittlungsstellenseitigen Steuern des Teilnehmeranschlußkonzentrators vorgesehen, von der die Hälfte jeweils zum Übertragen derselben Steuerinformationen und Meldungen vorgesehen sind, wie die andere Hälfte, wobei Steuerkanäle, die dieselben Steuerinformationen und Meldungen übertragen, zu unterschiedlichen PCM-Systemen gehören.

In einer Ausführungsform des Teilnehmeranschlußkonzentrators ist die Anzahl der Steuerkanäle zum ortsvermittlungsstellenseitigen Steuern des Teilnehmeranschlußkonzentrators abhängig vom momentanen Bandbreitenbedarf ortsvermittlungsstellenseitig variierbar.

In einer anderen Weiterbildung des Teilnehmeranschlußkonzentrators nach der Erfindung ist die Anzahl der Steuerkanäle zum ortsvermittlungsstellenseitigen Steuern des Teilnehmeranschlußkonzentrators zum Übertragen von Daten für bestimmte Anwendungen vorübergehend vergrößerbar.

Die letztgenannten Weiterbildungen des erfindungsgemäßen Teilnehmeranschlußkonzentrators ermöglichen es, die zum ortsvermittlungsstellenseitigen Steuern des Teilnehmeranschlußkonzentrators benötigte Bandbreite für gedoppelte Steuerkanäle im Normalbetrieb so festzulegen, daß nur geringe Bandbreitenreserven zur Verfügung stehen und in bestimmten Fällen, wenn größere Datenmengen für Betriebs- oder Steuerungsabläufe zu übertragen sind, eine größere Bandbreite bedarfsweise einzustellen. Eine Anwendung, für die die Bandbreite der Steuerkanäle vorübergehend erhöht werden kann, ist das ortsvermittlungsstellenseitige Laden von Steuerprogrammen für den Teilnehmeranschlußkonzentrator. Eine andere Anwendung zur bedarfsweisen Erhöhung der Steuerkanalbandbreite ist das Übertragen von Verkehrsmeßdaten.

Bisher ist beschrieben worden, daß ein erfindungsgemäßer Teilnehmeranschlußkonzentrator über eine V-Schnittstelle ortsvermittlungsstellenseitig angeschlossen ist, die mindestens die Merkmale einer standardisierten Schnittstelle V5.2 hat. In manchen Fällen kann es demnach empfehlenswert sein, mehr Steuerkanäle und mehr Ersatzsteuerkanäle oder Stand-By-Steuerkanäle vorzusehen, als es bei einer standardisierten Schnittstelle V5.2 zulässig ist. Ortsvermittlungsstellenseitig wird eine V-Schnittstelle eines erfindungsgemäßen Teilnehmeranschlußkonzentrators wie eine Schnittstelle V5.2 behandelt. Zusätzlich ist jedoch mindestens ein gedoppelter Steuerkanal für administrationstechnische und sicherheitstechnische Zwecke zum ortsvermittlungsstellenseitigen Steuern des Teilnehmeranschlußkonzentrators vorgesehen. Die administrationstechnische und sicherheitstechnische Steuerung des Teilnehmeranschlußkonzentrators kann sowohl für die Inbetriebnahme des Teilnehmeranschlußkonzentrators als auch für das Laden von Programmen und Daten im Teilnehmeranschlußkonzentrator zuständig sein. Außerdem kann sie zur Fehlermeldung und Alarmierung sowie zu Test- und Diagnosezwecken vorgesehen sein. Vorzugsweise sind die Schnittstellensteuerung der V-Schnittstelle und die ortsvermittlungsstellenseitige Steuerung des Teilnehmeranschlußkonzentrators voneinander unabhängig, können jedoch auch gekoppelt sein.

Wenn eine erfindungsgemäße V-Schnittstelle über PCM30-Strekken an mehrere periphere Anschlußeinheiten einer Ortsvermittlungsstelle angeschlossen ist, die jeweils beispielsweise vier PCM-Strecken bedienen können, sind i.a. mehr als die standardgemäß vorgesehenen drei Ersatz-Steuerkanäle erforderlich, um bei Ausfall einer peripheren Anschlußeinheit den damit verbundenen Ausfall von vier PCM30-Strecken auffangen zu können. Demnach ist es empfehlenswert, mehr als drei Ersatz-Steuerkanäle in der zweiten Schutzgruppe einer V-Schnittstelle vorzusehen, falls durch die Konfiguration der Ortsvermittlungsstelle der gleichzeitige Ausfall einer größeren Zahl von PCM30-Strecken zu befürchten ist. Durch das Erhöhen der Anzahl von im Stand-By-Betrieb zur Verfügung gestellten Ersatz-Steuerkanäle wird in den genannten Fällen die Ausfallsicherheit entsprechend erhöht, jedoch zu Lasten der Nutzbandbreite.

Wenn, gegebenenfalls bedarfsweise, die Steuerkanal-Bandbreite durch Erhöhen der Anzahl möglicher Steuerkanäle vergrößert wird (und aufgrund des gedoppelten Betriebes auch die Anzahl der Ersatz-Steuerkanäle entsprechend erhöht wird), kann beispielsweise der Wechsel der Steuersoftware eines erfindungsgemäßen Teilnehmeranschlußkonzentrators ortsvermittlungsstellenseitig besonders schnell über die V-Schnittstelle erfolgen. Wenn ein solcher sogenannter APS-Wechsel, also ein Wechsel der Steuersoftware, im Systemsplit oder gemäß den Vorschriften eines optimalen Softwareupdate (Laden in Hintergrundspeicher und nachfolgende Aktivierung) erfolgt, kann hierbei kein Totalausfall eines Teilnehmeranschlusses auftreten, falls im ersteren Falle zugleich die Anzahl der Ersatz-Steuerkanäle der zweiten Schutzgruppe auf die Anzahl der aktiven Kanäle dieser Schutzgruppe erhöht wurden und die Ersatz-Steuerkanäle in geeigneter Weise auf die PCM-Strecken der V-Schnittstelle verteilt wurden. Aufgrund der gleichzeitig aktiven Steuerkanäle und Ersatz-Steuerkanäle liegen die entsprechenden Daten und Befehle für einen APS-Wechsel immer doppelt vor. Bei Ausfall eines für die Vermittlungssteuerung notwendigen Steuerkanals im Systemsplit übernimmt der entsprechende Ersatz-Steuerkanal die ausgefallenen Funktionen.

Eine besonders vorteilhafte Ausgestaltungsform des erfindungsgemäßen Teilnehmeranschlußkonzentrators sieht neben einer V-Schnittstelle auch eine ortsvermittlungsstellenseitige standardisierte Schnittstelle V5.2 vor. Dadurch läßt sich die Anzahl der PCM-Systeme zwischen Teilnehmeranschlußkonzentrator und Ortsvermittlungsstelle noch flexibler festlegen. Eine V-Schnittstelle kann vorzugsweise mindestens zwei und gemäß den Merkmalen der standardisierten Schnittstelle V5.2 bis zu 16 PCM30-Strecken bedienen. Die weitere Schnittstelle V5.2 kann entsprechend ebenfalls zwischen 1 und 16 PCM30-Systemen enthalten. Demnach ist die Anzahl der zwischen einem solchen Teilnehmeranschlußkonzentrator mit erfindungsgemäßer V-Schnittstelle und mindestens einer weiteren Schnittstelle V5.2 und einer Ortsvermittlungsstelle definitionsgemäß zwischen 2 und 32 wählbar. Wenn beispielsweise spezielle Baugruppen und Softwarepakete zur Realisierung einer Schnittstelle V5.2 mit einer bestimmten Anzahl von PCM30-Systemen existiert, beispielsweise eine Schnittstelleneinheit für acht PCM30-Systeme oder für sechzehn PCM30-Systeme, so kann eine solche festgelegte und daher üblicherweise preisgünstigere Standardschnittstelle eingesetzt werden und die zusätzlich benötigten PCM30-Strecken können mit Hilfe einer erfindungsgemäßen V-Schnittstelle mit flexibler PCM30-Systemanzahl realisiert werden. Selbstverständlich können auch mehr als eine Schnittstelle V5.2 in einem erfindungsgemäßen Teilnehmeranschlußkonzentrator der vorstehend beschriebenen Ausgestaltungsform enthalten sein. Die Anzahl der maximal möglichen PCM30-Strecken und somit die maximal über die Schnittstelle übertragbare Gesamtinformationsbandbreite erhöhen sich entsprechend.

Eine Weiterbildung des erfindungsgemäßen Teilnehmeranschlußkonzentrators mit mindestens einer ortsvermittlungsstellenseitigen V-Schnittstelle und mindestens einer standardisierten Schnittstelle V5.2 kann mit unterschiedlichen ortsvermittlungsstellenseitigen Schnittstellen an mindestens zwei unterschiedliche Ortsvermittlungsstellen angeschlossen sein. Dadurch wird ermöglicht, daß der Teilnehmeranschlußkonzentrator über eine V-Schnittstelle mit Steuerkanälen zum ortsvermittlungsstellenseitigen Steuern des Teilnehmeranschlußkonzentrators an eine erste Ortsvermittlungsstelle angeschlossen ist, von der aus über die genannten Steuerkanäle die Beitriebstechnik und Sicherungstechnik des Teilnehmeranschlußkonzentrators steuerbar ist. Derselbe Teilnehmeranschlußkonzentrator kann zusätzlich über mindestens eine standardisierte Schnittstelle V5.2 eine andere Ortsvermittlungsstelle bedienen. Diese andere Ortsvermittlungsstelle benötigt hierzu lediglich eine standardisierte V-Schnittstelle gemäß V5.2.

Ein besonders vorteilhafte Variante des Teilnehmeranschlußkonzentrators hat eine ortsvermittlungsstellenseitige Schnittstelle, die wahlweise als standardisierte Schnittstelle V5.2 betreibbar ist oder als Schnittstelle mit den Merkmalen der standardisierten Schnittstelle V5.2 und zusätzlich mit mindestens zwei gedoppelten Steuerkanälen zum ortsvermittlungsstellenseitigen Steuern des Teilnehmeranschlußkonzentrators. Dadurch ist es möglich, denselben Teilnehmeranschlußkonzentrator wahlweise ortsvermittlungsstellenseitig an einer Ortsvermittlungsstelle, einem Anschlußleitungsnetzwerk oder einem übergeordneten Teilnehmeranschlußkonzentrator zu betreiben, der über Steuerkanäle die Steuerungsabläufe der Betriebs- und Sicherungstechnik des Teilnehmeranschlußkonzentrators steuert, oder wahlweise über eine standardisierte Schnittstelle V5.2 an einem Anschlußleitungsnetzwerk, einem übergeordneten Teilnehmeranschlußkonzentrator oder einer Ortsvermittlungsstelle zu betreiben. Im letztgenannten Falle wird die Betriebs- und Sicherungstechnik des Teilnehmeranschlußkonzentrators im Teilnehmeranschlußkonzentrator selbst oder über eine gesonderte Schnittstelle, beispielsweise gemäß Q3, erbracht. Der Vorteil einer solchen Ausgestaltungsform eines Teilnehmeranschlußkonzentrators liegt in der geringeren benötigten Lagerhaltung, da die beiden beschriebenen Betriebsfälle im Grunde mit gleichen Teilnehmeranschlußkonzentratoren ausführbar sind, die lediglich bezüglich der Schnittstellensteuerung und bezüglich der Teilnehmeranschlußkonzentratorsteuerung unterschiedliche Software benötigen und sich vielleicht noch in einer bedarfsweise vorzusehenden Steuerschnittstellenbaugruppe zum Steuern des Teilnehmeranschlußkonzentrators unterscheiden.

Nachstehend werden die Funktionen und Vorteile der Erfindung anhand von Ausführungsbeispielen unter Bezugnahme auf die Figuren erläutert:
- Fig. 1: zeigt in schematischer Darstellung einen Teilnehmeranschlußkonzentrator, der über 16 PCM-Strecken mit einer Ortsvermittlungsstelle verbunden ist,
- Fig. 2: zeigt in schematischer Blockdarstellung anhand eines Beispiels den Aufbau einer Ortsvermittlungsstelle, und
- Fig. 3: zeigt in schematischer Darstellung ein Ausführungsbeispiel eines Teilnehmeranschlußkonzentrators, der mit einer ersten V-Schnittstelle über acht PCM-Strecken an eine erste Ortsvermittlungseinrichtung ist und über eine zweite, standardgemäße V-Schnittstelle und 16 PCM-Strecken an eine zweite Ortsvermittlungseinrichtung angeschlossen ist.

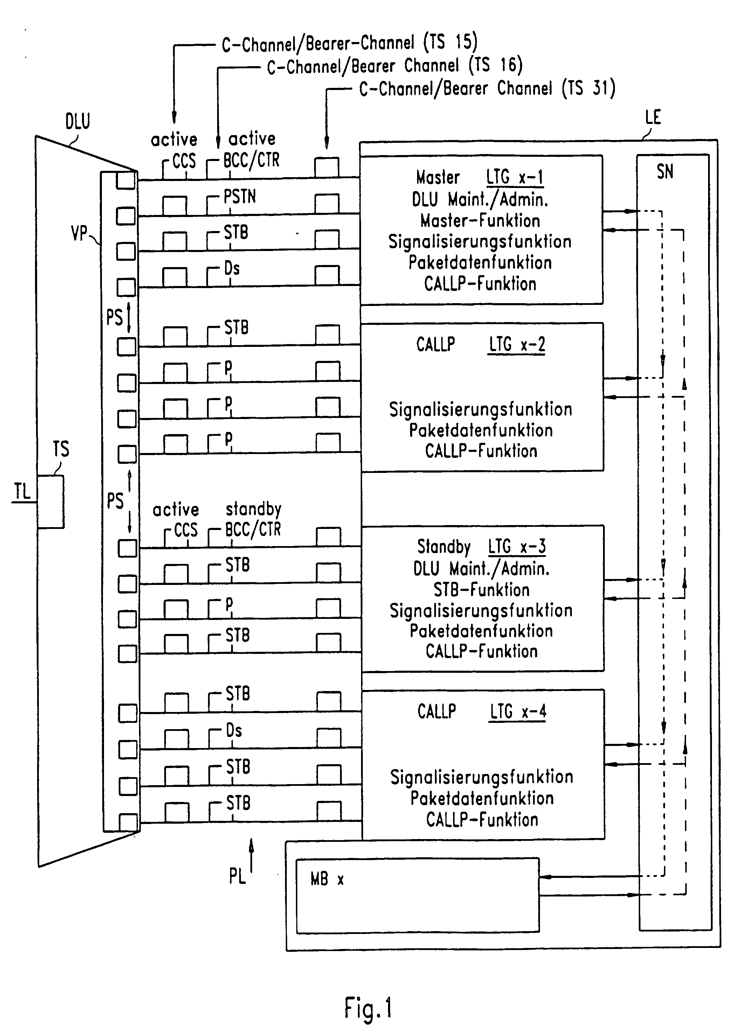

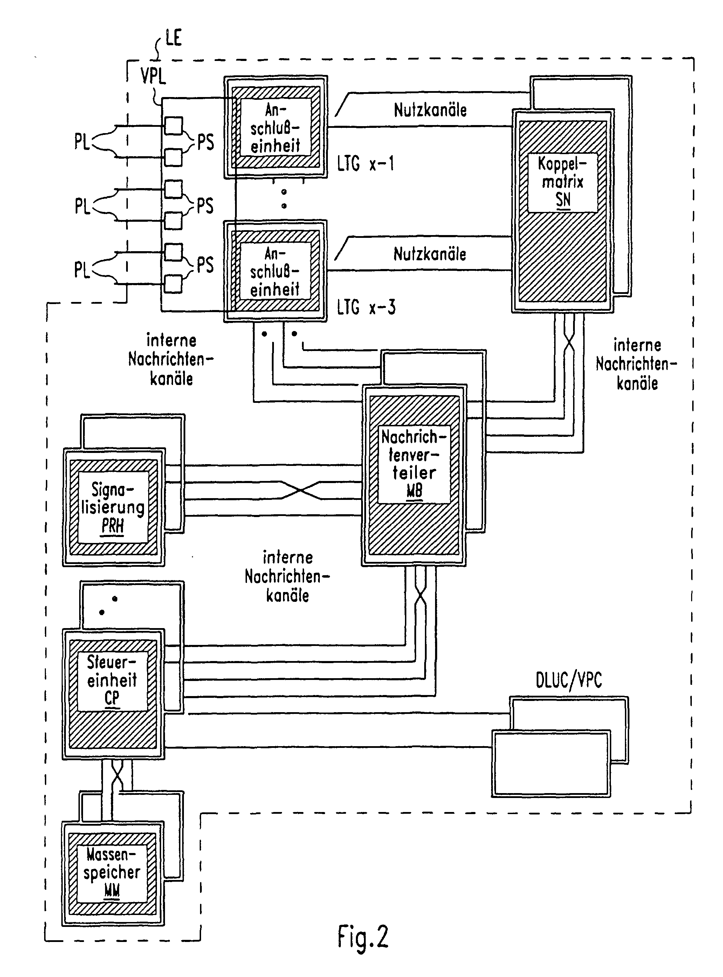

Fig. 1 zeigt einen Teilnehmeranschlußkonzentrator DLU mit Teilnehmerschnittstellen TS zum Anschließen von Teilnehmeranschlußleitungen TL. In der Figur ist beispielhaft eine einzige Teilnehmerschnittstelle TS mit Teilnehmeranschlußleitung TL dargestellt. Der Teilnehmeranschlußkonzentrator DLU enthält ortsvermittlungsstellenseitig eine V-Schnittstelle VP mit 16 PCM-Systemen PS zum Betreiben von PCM30-Strecken PL. Die V-Schnittstelle VP des Teilnehmeranschlußkonzentrators DLU ist über 16 PCM-Strecken PL (PCM30-Link) an Peripherieeinheiten LTGx-1, LTGx-2, LTGx-3 und LTGx-4 einer Ortsvermittlungsstelle LE (Local Exchange) angeschlossen. Die Ortsvermittlungsstelle LE enthält neben den beschriebenen Peripherieeinheiten LTGx-1, LTGx-2, LTGx-3 und LTGx-4 und einigen in der Fig. 1 nicht dargestellten Komponenten noch ein Koppelnetz SN und einen Nachrichtenverteiler MBx. Weitere Komponenten einer Ortsvermittlungseinrichtung LE sind bereits weiter oben erwähnt und werden weiter unten unter Bezugnahme auf die Fig. 2 beschrieben.

In den 16 PCM30-Strecken PL sind jeweils die Zeitschlitze TS15, TS16 und TS31, die in einer V-Schnittstelle gemäß V5.2 als Steuerkanalzeitschlitze vorgesehen sind, einzeln dargestellt. Hierbei ist der Zeitschlitz TS15 der zuoberst dargestellten PCM-Strecke PL, die an die periphere Anschlußeinheit LTGx-1 angeschlossen ist, mit CCS bezeichnet. Diese ist im dargestellten Betriebsfall aktiv und dient dem Übertragen von Steuersignalen zum ortsvermittlungsstellenseitigen Steuern des Teilnehmeranschlußkonzentrators DLU. Der Steuerkanal (C-Channel) des Zeitschlitzes TS31 dieser PCM30-Strecke ist in Fig. 1 nicht gekennzeichnet, kann jedoch wahlweise bzw. bedarfsweise auch oder zusätzlich zum Übertragen solcher Steuersignale vorgesehen sein. Der Zeitschlitz TS15 der zuoberst dargestellten PCM30-Strecke PL zum Verbinden des Teilnehmeranschlußkonzentrators DLU mit der peripheren Anschlußeinheit LTGx-3 ist ebenfalls mit CCS gekennzeichnet und im dargestellten Betriebsfall aktiv geschaltet, um dieselben Steuersignale zum ortsvermittlungsstellenseitigen Steuern des Teilnehmeranschlußkonzentrators DLU zu übertragen, wie der entsprechend gekennzeichnete Schnittstellensteuerkanal, der an die periphere Anschlußeinheit LTGx-1 angeschlossen PCM30-Strecken PL.

Im Ausführungsbeispiel gemäß Fig. 1 ist der Zeitschlitz TS16 der zuoberst dargestellten PCM30-Strecke PL zu der Peripherieanschlußeinheit LTGx-1 mit BCC/CTR gekennzeichnet und im dargestellten Betriebsfall aktiv geschaltet, um einen Steuerkanal (C-Channel) zu kennzeichnen, der gemäß der standardisierten Schnittstelle V5.2 Signale zur Nutzkanalsteuerung BCC (Bearer Channel Control), Schnittstellensteuersignale und ein oben erwähntes Schutzprotokoll überträgt.

Der entsprechende Zeitschlitz TS16 der zuoberst dargestellten PCM30-Strecke PL, die an die periphere Anschlußeinheit LTGx-3 angeschlossen ist, ist in entsprechender Weise mit BCC/CTR gekennzeichnet und im dargestellten Betriebsfall im Stand-By-Betrieb. Dies bedeutet, wie weiter oben näher erläutert, daß im dargestellten Normalbetriebsfall in diesem Zeitschlitz nur ein Schutzprotokoll übertragen wird, um sicherzustellen, daß bei Ausfall der zuoberst dargestellten PCM30-Strecke PL, die an die periphere Anschlußeinheit LTGx-1 angeschlossen ist, ein Umschalten auf diesen Ersatzkanal, der an die periphere Anschlußeinheit LTGx-3 angeschlossen ist, gewährleistet wird. Wie der Fig. 1 zu entnehmen ist, sind die in den Zeitschlitzen TS15 und TS16 der beiden beschriebenen PCM30-Strecken PL gedoppelten Steuerkanäle und Schnittstellensteuerkanäle nicht nur in unterschiedlichen PCM30-Strecken PL angeordnet, sondern auch an unterschiedliche periphere Anschlußeinheiten LTGx-1 und LTGx-3 angeschlossen. Dadurch ist sichergestellt, daß auch bei Ausfall der peripheren Anschlußeinheit LTGx-1 und somit dem Ausfall aller mit dieser verbundenen PCM30-Strecken PL die Steuerung der V-Schnittstelle und die Steuerung des Teilnehmeranschlußkonzentrators DLU möglich sind.

Die Zeitschlitze TS16 der übrigen PCM30-Strecken PL sind teilweise mit PSTN, STB, Ds oder p gekennzeichnet. Dies soll beispielhaft dargestellen, daß die entsprechenden Zeitschlitze für Steuerkanäle mit PSTN-Protokoll PSTN, als Ersatzsteuerkanal STB, als ISDN-D-Kanal mit Paketdatenübertragung p oder als ISDN-Steuerkanal mit S-Datenübertragung Ds verwendbar sind.

Die periphere Anschlußeinheiten LTGx-1, LTGx-2, LTGx-3 und LTGx-4 erfüllen jeweils Rufsteuerungsfunktionen (Call-Processing-Funktionen CALLP), Signalisierungsfunktionen und Paketdatenfunktionen. Die periphere Anschlußeinheiten LTGx-1 und LTGx-3 erfüllen darüberhinaus Steuerfunktionen wie Administrations- und Sicherungsfunktionen zum Steuern des Teilnehmeranschlußkonzentrators DLU. Die periphere Anschlußeinheit LTGx-1 erfüllt hierbei eine Masterfunktion, wobei jedoch die für die ortsvermittlungsseitige Steuerung des Teilnehmeranschlußkonzentrators DLU vorgesehenen Steuerkanäle im Normalfall beide aktiv geschaltet sind. Außerdem erfüllt die periphere Anschlußeinheit LTGx-1 eine Masterfunktion bezüglich der Schnittstellensteuerung der V-Schnittstelle VP, wohingegen die periphere Anschlußeinheit LTGx-3 eine Stand-By-Funktion zur Schnittstellensteuerung der V-Schnittstelle VP erfüllt.

Fig. 2 zeigt ein Ausführungsbeispiel einer Ortsvermittlungsstelle mit einer Koppelmatrix SN, die über interne Nachrichtenkanäle an einen Nachrichtenverteiler MB angeschlossen ist und über Nutzkanäle an periphere Anschlußeinheiten LTGx-1 und LTGx-3 angeschlossen ist. Die Anschlußeinheiten LTGx-1 und LTGx-3 sind außerdem über interne Nachrichtenkanäle mit dem Nachrichtenverteiler MB verbunden und sind darüber hinaus an PCM30-Strecken PL angeschlossen. In der Fig. 2 sind nur zwei Anschlußeinheiten LTGx-1und LTGx-3 dargestellt, es sind jedoch auch mehr als zwei solche Anschlußeinheiten in einer Ortsvermittlungsstelle möglich. Um zu verdeutlichen, daß mehrere Anschlußeinheiten LTGx-1 und LTGx-3 gemeinsam zum Bedienen einer Schnittstelle in einem über PCM30-Strecken PL anschließbaren Teilnehmeranschlußkonzentrator vorgesehen sind, ist eine entsprechende Schnittstelle VPL mit PCM30-Systemen PS, die über die Anschlußeinheiten LTGx-1 und LTGx-3 übergreifend wirkt, dargestellt.

Der Nachrichtenverteiler MB ist an eine Signalisierungseinrichtung PRH angeschlossen und über interne Nachrichtenkanäle außerdem an eine Steuereinheit CP. Die Steuereinheit CP greift auf einen Massenspeicher MM zu und berücksichtigt außerdem Steuerkomponenten DLUC/VPC zum ortsvermittlungsstellenseitigen Steuern von Teilnehmeranschlußkonzentratoren DLU und von V-Schnittstellen VP in Teilnehmeranschlußkonzentratoren DLU.

Die Funktionsabläufe innerhalb einer Ortsvermittlungseinrichtung gehören zum Grundwissen eines zuständigen Fachmanns, wurden teilweise bereits weiter oben beschrieben und werden daher hier nicht näher erläutert.

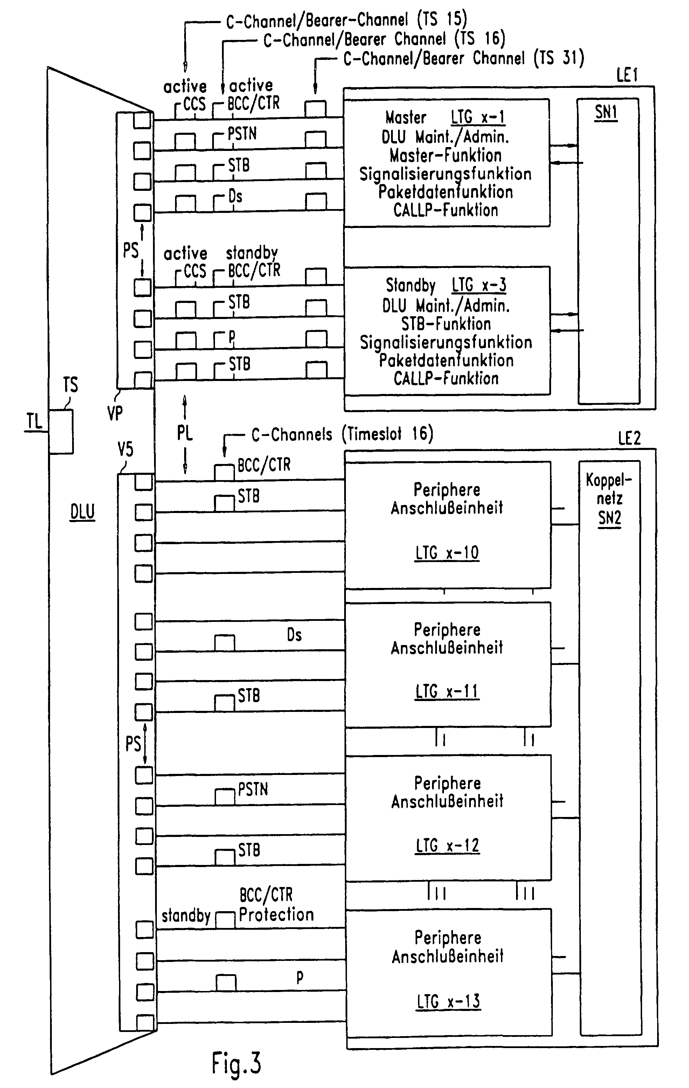

Fig. 3 zeigt ein Ausführungsbeispiel einer Weiterbildung eines Teilnehmeranschlußkonzentrators gemäß Fig. 1, der über eine V-Schnittstelle VP mit im Ausführungsbeispiel acht PCM30-Systemen PS und entsprechend acht PCM30-Strecken PL an eine erste Ortsvermittlungseinrichtung LE1 angeschlossen ist und über eine standardisierte V5.2-Schnittstelle V5 mit 16 PCM30-Systemen PS über 16 PCM30-Strecken PL an eine zweite Ortsvermittlungseinrichtung LE2 angeschlossen ist. Auch in Fig. 3 ist beispielhaft eine Teilnehmerschnittstelle TS mit angeschlossener Teilnehmeranschlußleitung TL dargestellt.

Die Ortsvermittlungsstelle LE1 aus Fig. 3 enthält zwei periphere Anschlußeinheiten LTGx-1 und LTGx-3, die dieselben Funktionen erfüllen, wie die mit demselben Bezugszeichen versehenen peripheren Anschlußeinheiten LTGx-1 und LTGx-3 der in Fig. 1 dargestellten Ortsvermittlungsstelle LE. Entsprechend ist auch die Belegung der Steuerkanäle bzw. die Zeitschlitze TS15 und TS16 der zwischen den periphere Anschlußeinheiten LTGx-1 und LTGx-3 und der V-Schnittstelle VP vorgesehenen PCM30-Strecken PL identisch mit der Belegung im Ausführungsbeispiel gemäß Fig. 1. Der Einfachheit halber ist von der Ortsvermittlungsstelle LE1 zusätzlich zu den peripheren Anschlußeinheiten LTGx-1 und LTGx-3 nur noch das Koppelnetzwerk SN1 dargestellt. Selbstverständlich sind trotzdem weitere, für eine entsprechende Ortsvermittlungsstelle notwendige Einheiten enthalten.

Die in Fig. 3 dargestellte Ortsvermittlungsstelle LE2, die über die standardisierte Schnittstelle V5 mit dem Teilnehmeranschlußkonzentrator DLU verbunden ist, enthält vier periphere Anschlußeinheiten LTGx-10, LTGx-11, LTGx-12 und LTGx-13. Außerdem ist ein Koppelnetz SN2 dargestellt. Auch hier wird aufgrund der Übersichtlichkeit auf die Darstellung der weiteren üblichen Komponenten einer Ortsvermittlungsstelle verzichtet.

Von den PCM30-Strecken PL, mit denen die standardisierte Schnittstelle V5 an die Ortsvermittlungsstelle LE2 angekoppelt ist, sind in Fig. 3 die im Ausführungsbeispiel für Steuerkanal-Zwecke verwendeten Zeitschlitze Timeslot 16 dargestellt, wobei die Steuerkanalbedeutung dem entsprechenden Bezugszeichen in analoger Weise zugeordnet ist, wie bei der Darstellung gemäß Fig. 1. Wie deutlich zu erkennen ist, sind keine Zeitschlitze zum Übertragen von Steuersignalen für eine ortsvermittlungsstellenseitige Steuerung des Teilnehmeranschlußkonzentrators DLU vorgesehen. Die zuoberst dargestellte PCM30-Strecke PL, die mit der Peripherieanschlußeinheit LTGx-10 verbunden ist, dient der Master-Übertragung von Steuersignalen zur Schnittstellensteuerung der standardisierten Schnittstelle V5 und ist daher mit BCC/CTR gekennzeichnet. Der Zeitschlitz Timeslot 16 der zuoberst dargestellten PCM30-Strecke PL, die mit der peripheren Anschlußeinheit LTGx-13 verbunden ist, ist als Ersatzkanal für die Schnittstellensteuerung der standardisierten Schnittstelle V5 vorgesehen und wird im dargestellten Betriebsfall im Stand-By-Betrieb betrieben, d.h., daß nur das Schutzprotokoll übertragen wird. Dieser Zeitschlitz ist in der Fig. 3 mit BCC/CTR Protection gekennzeichnet.

## Patentansprüche

1. Teilnehmeranschlußkonzentrator (DLU) mit Teilnehmerschnittstellen zum Anschließen von Teilnehmeranschlußleitungen, und mit mindestens einer ortsvermittlungsstellenseitigen, mehrere PCM-Systeme umfassenden V-Schnittstelle (VP), **dadurch gekennzeichnet, daß** die V- Schnittstelle (VP) mindestens die Merkmale der standardisierten Schnittstelle V5.2 hat und daß zwei Kanäle unterschiedlicher PCM-Systeme (PS) als gedoppelte Steuerkanäle (CCS) zum ortsvermittlungsstellenseitigen Steuern des Teilnehmeranschlußkonzentrators (DLU) vorgesehen sind, die zum Steuern des Teilnehmeranschlußkonzentrators (DLU) gleichzeitig aktiv sind, wobei im Normalfall das Auswerten der auf dem ersten der beiden Steuerkanäle (CCS) übertragenen Steuerbefehle und Meldungen erfolgt und, falls dieser erste Steuerkanal (CCS) gestört ist, automatisch das Auswerten der auf dem zweiten der beiden Steuerkanäle (CCS) übertragenen Steuerbefehle und Meldungen erfolgt.

2. Teilnehmeranschlußkonzentrator (DLU) mit Teilnehmerschnittstellen zum Anschließen von Teilnehmeranschlußleitungen, und mit mindestens einer ortsvermittlungsstellenseitigen, mehrere PCM-Systeme umfassenden V-Schnittstelle (VP), **dadurch gekennzeichnet, daß** die V- Schnittstelle (VP) mindestens die Merkmale der standardisierten Schnittstelle V5.2 hat und daß zwei Kanäle unterschiedlicher PCM-Systeme als gedoppelte Steuerkanäle (CCS) zum ortsvermittlungsstellenseitigen Steuern des Teilnehmeranschlußkonzentrators (DLU) vorgesehen sind, die zum Steuern des Teilnehmeranschlußkonzentrators (DLU) gleichzeitig aktiv sind, wobei im Normalfall das Auswerten der auf beiden Steuerkanälen (CCS) übertragenen Steuerbefehle und Meldungen erfolgt und, falls einer dieser Steuerkanäle (CCS) gestört ist, der gestörte Steuerkanal (CCS) deaktiviert wird.

3. Teilnehmeranschlußkonzentrator (DLU) nach Anspruch 1 oder 2, **dadurch gekennzeichnet, daß** bei einer standardisierten Schnittstelle V5.2 für gedoppelte Schnittstellensteuerkanäle vorgesehene Zeitschlitze (TS16) zum ortsvermittlungsstellenseitigen Steuern des Teilnehmeranschlußkonzentrators (DLU) vorgesehen sind.

4. Teilnehmeranschlußkonzentrator (DLU) nach Anspruch 1, 2 oder 3, **dadurch gekennzeichnet, daß** eine geradzahlige Anzahl Steuerkanäle (CCS) zum ortsvermittlungsstellenseitigen Steuern des Teilnehmeranschlußkonzentrators (DLU) vorgesehen sind, wobei eine Hälfte dieser Steuerkanäle (CCS) jeweils zum Übertragen der selben Steuerinformationen und Meldungen vorgesehen sind, wie die andere Hälfte, und wobei Steuerkanäle (CCS), die die selben Steuerinformationen und Meldungen übertragen, zu unterschiedlichen PCM-Systemen (PS) gehören.

5. Teilnehmeranschlußkonzentrator (DLU) nach Anspruch 4, **dadurch gekennzeichnet, daß** die geradzahlige Anzahl der Steuerkanäle (CCS) zum ortsvermittlungsstellenseitigen Steuern des Teilnehmeranschlußkonzentrators (DLU) abhängig vom momentanen Bandbreitenbedarf ortsvermittlungsstellenseitig variierbar ist.

6. Teilnehmeranschlußkonzentrator (DLU) nach Anspruch 4 oder 5, **dadurch gekennzeichnet, daß** die geradzahlige Anzahl der Steuerkanäle (CCS) zum ortsvermittlungsstellenseitigen Steuern des Teilnehmeranschlußkonzentrators (DLU) zum Übertragen von Daten für bestimmte Anwendungen vorübergehend vergrößerbar ist.

7. Teilnehmeranschlußkonzentrator (DLU) nach Anspruch 6, **dadurch gekennzeichnet, daß** eine bestimmte Anwendung das ortsvermittlungsstellenseitige Laden von Steuerprogrammen für den Teilnehmeranschlußkonzentrator (DLU) ist.

8. Teilnehmeranschlußkonzentrator (DLU) nach Anspruch 6 oder 7, **dadurch gekennzeichnet, daß** eine bestimmte Anwendung das Übertragen von Verkehrsmeßdaten ist.

9. Teilnehmeranschlußkonzentrator (DLU) nach einem der vorhergehenden Ansprüche, **gekennzeichnet durch** mindestens eine ortsvermittlungsstellenseitige standardisierte Schnittstelle V5.2 (V5).

10. Teilnehmeranschlußkonzentrator (DLU) nach Anspruch 9, **dadurch gekennzeichnet, daß** die ortsvermittlungsseitigen Schnittstellen (VP, V5) zum Ankoppeln an mindestens zwei Ortsvermittlungsstellen (LE1, LE2) vorgesehen sind.

11. Teilnehmeranschlußkonzentrator (DLU) nach einem der vorhergehenden Ansprüche, **dadurch gekennzeichnet, daß** die ortsvermittlungsstellenseitige V-Schnittstelle (VP) wahlweise als standardisierte Schnittstelle V5.2 (V5) betreibbar ist.

## Claims

1. Concentrator for subscriber connections (DLU) with subscriber interfaces to connect subscriber lines and with at least one V interface (VP) comprising a number of PCM systems on the local exchange side, **characterised in that** the V interface (VP) has at least the features of the standard interface V5.2 and that two channels of different PCM systems (PS) are provided as duplicate control channels (CCS) for control on the local exchange side of the concentrator for subscriber connections (DLU), being simultaneously active to control the concentrator for subscriber connections (DLU), with the control commands and messages transmitted on the first of the two control channels (CCS) being evaluated as standard and if there is a fault on this first control channel (CCS), the control commands and messages transmitted on the second of the two control channels (CCS) being evaluated automatically.

2. Concentrator for subscriber connections (DLU) with subscriber interfaces to connect subscriber lines and with at least one V interface (VP) comprising a number of PCM systems on the local exchange side, **characterised in that** the V interface (VP) has at least the features of the standard interface V5.2 and that two channels of different PCM systems (PS) are provided as duplicate control channels (CCS) for control on the local exchange side of the concentrator for subscriber connections (DLU), being simultaneously active to control the concentrator for subscriber connections (DLU), with the control commands and messages transmitted on both control channels (CCS) being evaluated as standard and if there is a fault on one of these control channels (CCS), the faulty channel (CCS) being deactivated.

3. Concentrator for subscriber connections (DLU) according to claim 1 or 2, **characterised in that** time slots (TS16) provided for duplicate interface control channels in the case of a standard interface V5.2 are provided for control on the local exchange side of the concentrator for subscriber connections (DLU).

4. Concentrator for subscriber connections (DLU) according to claim 1, 2 or 3, **characterised in that** an even number of control channels (CCS) is provided for control on the local exchange side of the concentrator for subscriber connections (DLU), half of said control channels (CCS) being provided respectively to transmit the same control information and messages as the other half and control channels (CCS), which transmit the same control information and messages, belonging to different PCM systems (PS).

5. Concentrator for subscriber connections (DLU) according to claim 4, **characterised in that** the even number of control channels (CCS) for control on the local exchange side of the concentrator for subscriber connections (DLU) can be varied on the local exchange side as a function of the current bandwidth requirement.

6. Concentrator for subscriber connections (DLU) according to claim 4 or 5, **characterised in that** the even number of control channels (CCS) for control on the local exchange side of the concentrator for subscriber connections (DLU) can be increased temporarily to transmit data for specific applications.

7. Concentrator for subscriber connections (DLU) according to claim 6, **characterised in that** a specific application is the loading on the local exchange side of control programs for the concentrator for subscriber connections (DLU).

8. Concentrator for subscriber connections (DLU) according to claim 6 or 7, **characterised in that** a specific application is the transmission of traffic measuring data.

9. Concentrator for subscriber connections (DLU) according to one of the preceding claims, **characterised by** at least one standard interface V5.2 (V5) on the local exchange side.

10. Concentrator for subscriber connections (DLU) according to claim 9, **characterised in that** the interfaces on the local exchange side (VP, V5) are provided for linking to at least two local exchanges (LE1, LE2).

11. Concentrator for subscriber connections (DLU) according to one of the preceding claims, **characterised in that** the V interface (VP) on the local exchange side can be operated optionally as a standard interface V5.2 (V5) .

## Revendications

1. Concentrateur pour le raccordement d'abonnés (DLU), doté d'interfaces d'abonnés pour le raccordement de lignes de raccordement d'abonnés, et d'au moins une interface V (VP), du côté central local, comprenant plusieurs systèmes PCM, **caractérisé en ce que** l'interface V (VP) a au moins les caractéristiques de l'interface standardisée V5.2 et **en ce que** deux canaux de différents systèmes PCM (PS) sont prévus comme canaux de commande (CCS) doublés pour la commande, du côté du central local, du concentrateur pour le raccordement d'abonnés (DLU), ceux-ci étant simultanément actifs pour commander le concentrateur pour le raccordement d'abonnés (DLU), l'évaluation des instructions de commande et des messages transmis sur le premier des deux canaux de commande (CCS) étant réalisée en cas normal, et, au cas où ce premier canal de commande (CCS) est défaillant, l'évaluation des instructions de commande et des messages transmis sur le deuxième des deux canaux de commande (CCS) étant réalisée automatiquement.

2. Concentrateur pour le raccordement d'abonnés (DLU), doté d'interfaces d'abonnés pour le raccordement de lignes de raccordement d'abonnés, et d'au moins une interface V (VP), du côté central local, comprenant plusieurs systèmes PCM, **caractérisé en ce que** l'interface V (VP)a au moins les caractéristiques de l'interface standardisée V5.2 et **en ce que** deux canaux de différents systèmes PCM (PS) sont prévus comme canaux de commande (CCS) doublés pour la commande, du côté du central local, du concentrateur pour le raccordement d'abonnés (DLU), ceux-ci étant simultanément actifs pour commander le concentrateur pour le raccordement d'abonnés (DLU), l'évaluation des instructions de commande et des messages transmis sur le premier des deux canaux de commande (CCS) étant réalisée en cas normal, et, au cas où l'un de ces canaux de commande (CCS) est défaillant, le canal de commande défaillant (CCS) est désactivé.

3. Concentrateur pour le raccordement d'abonnés (DLU) selon la revendication 1 ou 2, **caractérisé en ce que** des créneaux temporels (TS16) prévus pour des canaux de commande d'interface doublés en cas d'une interface standardisée V5.2 sont prévus pour la commande, du côté central local, du concentrateur pour le raccordement d'abonnés (DLU).

4. Concentrateur pour le raccordement d'abonnés (DLU) selon la revendication 1, 2 ou 3, **caractérisé en ce qu'**un nombre pair de canaux de commande (CCS) est prévu pour la commande, du côté du central local, du concentrateur pour le raccordement d'abonnés (DLU), une moitié de ces canaux de commande (CCS) étant respectivement prévue pour transmettre les mêmes informations de commande et les mêmes messages que l'autre moitié, et les canaux de commande (CCS), qui transmettent les mêmes informations de commande et les mêmes messages, appartenant à différents systèmes PCM (PS) .

5. Concentrateur pour le raccordement d'abonnés (DLU) selon la revendication 4, **caractérisé en ce que** le nombre pair de canaux de commande (CCS) pour la commande, du côté du central local, du concentrateur pour le raccordement d'abonnés (DLU) est variable, du côté du central local, en fonction du besoin momentané en largeur de bande.

6. Concentrateur pour le raccordement d'abonnés (DLU) selon la revendication 4 ou 5, **caractérisé en ce que** le nombre pair de canaux de commande (CCS) pour la commande, du côté du central local, du concentrateur pour le raccordement d'abonnés (DLU) peut être temporairement augmenté pour transmettre des données pour certaines applications.

7. Concentrateur pour le raccordement d'abonnés (DLU) selon la revendication 6, **caractérisé en ce qu'**une certaine application est le chargement, du côté du central local, de programmes de commande pour le concentrateur pour le raccordement d'abonnés (DLU).

8. Concentrateur pour le raccordement d'abonnés (DLU) selon la revendication 6 ou 7, **caractérisé en ce qu'**une certaine application est la transmission de données de mesure de trafic.

9. Concentrateur pour le raccordement d'abonnés (DLU) selon l'une quelconque des revendications précédentes, **caractérisé par** au moins une interface standardisée V5.2 (V5) du côté du central local.

10. Concentrateur pour le raccordement d'abonnés (DLU) selon la revendication 9, **caractérisé en ce que** les interfaces (VP, V5) du côté du central local sont prévues pour le couplage à au moins deux centraux locaux (LE1, LE2).

11. Concentrateur pour le raccordement d'abonnés (DLU) selon l'une quelconque des revendications précédentes, **caractérisé en ce que** l'interface V (VP) du côté du central local peut être exploitée comme interface standardisée V5.2 (V5) .
